# EUROPEAN PATENT APPLICATION

(11) **EP 1 596 511 A1**
(43) Date of publication of application: **16.11.2005**
(21) Application number: 05010005.6
(22) Date of filing: 09.05.2005
(51) Int. Cl.: H04B 10/08, H04B 10/18

(54) **Spectral tilt measurement system and method for an optical medium**

(30) Priority: 10.05.2004 US 842120
(71) Applicant: ALCATEL, 75008 Paris (FR)
(72) Inventor: Manderscheid, Richard M., Dallas Texas 75287 (US); Butler, David J., Richarson Texas 75080 (US)
(74) Representative: Schäfer, Wolfgang

(57) **Abstract**

A spectral tilt measurement system and method operable with an optical medium. In one embodiment, an optical signal is split into bands whose relative power ratios are used in determining spectral tilt. In another embodiment, each channel of the optical signal is modulated using an ID tone that is used for measuring spectral power of each identified channel. Spectral tilt is determined by comparing the relative channel powers across the optical medium.

## Description

### BACKGROUND OF THE INVENTION

### Technical Field of the Invention

The present invention generally relates to optical communications equipment. More particularly, and not by way of any limitation, the present invention is directed to a spectral tilt measurement system and method for an optical medium.

### Description of Related Art

Uncompensated spectral tilt in an amplified line system causes degradation of the optical signal-to-noise ratio and, if not controlled, will result in a background error ratio and eventual loss of transmission. Spectral tilt can be caused by a number of factors such as mis-adjustment of an amplifier gain stage, bend-induced losses in the fiber medium, Brilluion scattering or Raman-induced tilt. Adjustment of the spectral tilt is possible by careful adjustment of an amplifier's mid-stage loss, which in turn adjusts the spectral response of the amplifier, thereby compensating for tilt introduced in other line components. Such adjustments are generally made during the installation phase, although site measurements on deployed optical fiber systems suggest that this is not always accomplished correctly.

Although established standards, e.g., G.652, cover transmission losses due to fiber bending, called "macrobend losses", these losses are generally specified for loss around a 30mm radius mandrel at 1550nm. However, such a primitive form of testing and compliance does not adequately characterize the fiber for use in wavelength division multiplexing in the C band (1530 nm to 1565 nm). The problem is more severe in the L band (1565 nm to 1635 nm) since the macrobending loss is highly wavelength-dependent.

### SUMMARY OF THE INVENTION

A spectral tilt measurement system and method operable with an optical medium is provided. In one embodiment, an optical signal is split into bands whose relative power ratios are used in determining spectral tilt. In another embodiment, each channel of the optical signal is modulated using an ID tone that is used for measuring spectral power of each identified channel. Spectral tilt is determined by comparing the relative channel powers across the optical medium.

### BRIEF DESCRIPTION OF THE DRAWINGS

The accompanying drawings are incorporated into and form a part of the specification to illustrate one or more presently preferred exemplary embodiments of the present invention. Various advantages and features of the invention will be understood from the following Detailed Description taken in connection with the appended claims and with reference to the attached drawing figures in which:

FIG. 1 depicts an exemplary optical path wherein spectral tilt may be measured in accordance with an embodiment of the present invention;

FIG. 2 depicts a graph illustrating various amounts of spectral tilt introduced in an optical signal associated with the optical path shown in FIG. 1;

FIG. 3 depicts a functional block diagram of a tilt measurement system according to one embodiment of the present invention;

FIG. 4 depicts a flow chart of the operations involved in a tilt measurement method operable with the system shown in FIG. 3;

FIG. 5 depicts a functional block diagram of a tilt measurement system according to another embodiment of the present invention;

FIG. 6 depicts a flow chart of the operations involved in a tilt measurement method operable with the system shown in FIG. 5;

FIG. 7 depicts a functional block diagram of a tilt measurement system according to yet another embodiment of the present invention; and

FIG. 8 depicts a functional block diagram of an exemplary optical fiber amplifier (OFA) including a tilt controller that is operable to receive tilt control input signals in accordance with the teachings of the present invention.

### DETAILED DESCRIPTION OF THE DRAWINGS

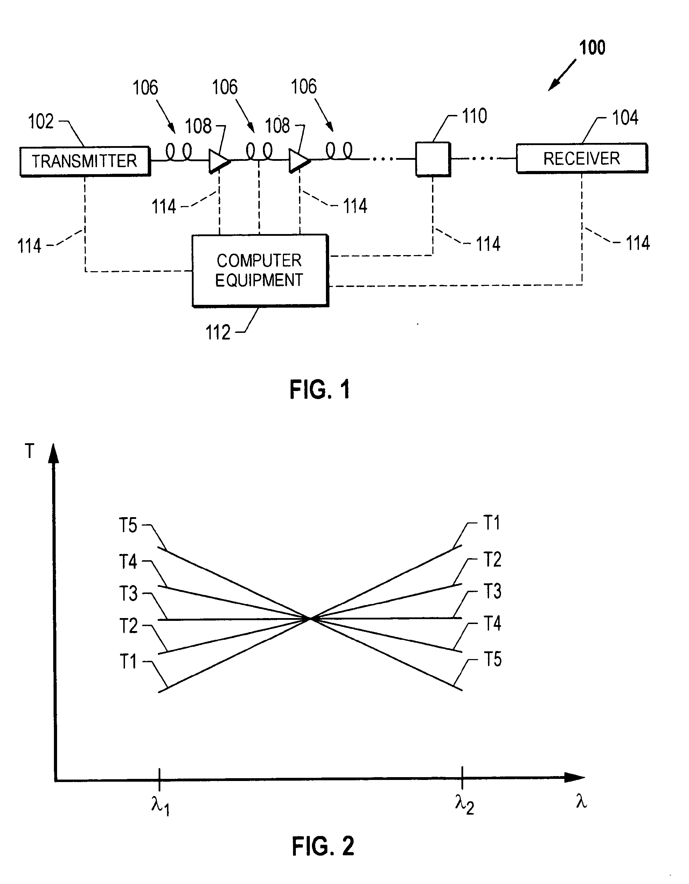

Embodiments of the invention will now be described with reference to various examples of how the invention can best be made and used. Like reference numerals are used throughout the description and several views of the drawings to indicate like or corresponding parts, wherein the various elements are not necessarily drawn to scale. Referring now to the drawings, and more particularly to FIG. 1, depicted therein is an exemplary optical path 100 wherein spectral tilt may be measured in accordance with an embodiment of the present invention. The optical path 100 includes a transmitter 102 that is operable to transmit information to a receiver 104 over a series of fiber paths. Each fiber path may include one or more spans 106 of optical transmission fiber. Fiber spans 106 may be on the order of 40-60 km in length for long-haul networks or may be any other suitable length for use in signal transmission in an optical communications network. In terms of implementation, the optical path 100 may be a point-to-point link, part of a fiber ring network, or part of any other suitable network or system.

The optical path 100 of FIG. 1 may be used to support wavelength division multiplexing (WDM) arrangements in which multiple communications channels are provided using multiple wavelengths of light. For example, the optical path link 100 may support a system with 40 channels, each using a different optical carrier (OC) wavelength. Optical channels may be modulated at, for example, approximately 10 Gbps (OC-192). The carrier wavelengths that are used may be in the vicinity of well known wavelengths, including the C-band (1530 nm to 1565 nm) as well as the L-band (1565 nm to 1635 nm) wavelengths. These are merely illustrative system characteristics, however. If desired, fewer channels may be provided (e.g., one channel), more channels may be provided (e.g., hundreds of channels), signals may be carried on multiple wavelengths, signals may be modulated at slower or faster data rates (e.g., at approximately 2.5 Gbps for OC-48 or at approximately 40 Gbps for OC-768), and different carrier wavelengths may be supported (e.g., individual wavelengths or sets of wavelengths in the range of 1240-1670 nm).

As illustrated, the optical path link 100 includes one or more optical amplifiers 108 that may be used to amplify optical signals associated the medium of the optical path. Optical amplifiers 108 may include booster amplifiers, in-line amplifiers, and preamplifiers. Optical amplifiers 108 may comprise rare-earth-doped fiber amplifiers (REDFAs) such as erbium-doped fiber amplifiers (EDFAs), amplifiers that include discrete Raman-pumped coils, amplifiers that include pumps for optically pumping spans of transmission fiber 106 to create optical gain through stimulated Raman scattering, semiconductor optical amplifiers, or any other suitable optical amplifiers.

Additionally, the optical path link 100 may include other optical network equipment 110 such as, for example, dispersion compensation modules, dynamic filter modules, add/drop multiplexers, optical channel monitor modules, Raman pump modules, optical switches, performance monitors, etc. For clarity, aspects of the present invention will be described primarily in the context of a generalized optical element or component, which may comprise just a span of optical fiber or any active equipment having gain stages such as optical amplifiers 108. This is, however, merely illustrative. The features of the present invention may be used with any suitable optical network equipment if desired.

Continuing to refer to FIG. 1, computer equipment 112 may be used to implement a management, administration and control system with respect to the optical path 100. Computer equipment 112 may include one or more computers or controllers and may be located remotely at network nodes and one or more network management facilities, or co-located with the optical equipment of the path 100 to effectuate local feedback control loops, if any. As indicated in the illustrated embodiment, the network management system may communicate with optical amplifiers 108, transmitter 102, receiver 104 and other optical network equipment 110 using one or more communications paths 114, which may be based on any suitable optical or electrical paths. For example, communications paths 114 may include service or telemetry channel paths implemented using spans 106, may include wired or wireless communications paths, may involve communications paths formed by slowly modulating the normal data channels on link 100 at small modulation depths, et cetera. Paths 114 may also be used for direct communications between amplifiers 18 and other optical network equipment.

As will be described in greater detail hereinbelow, computer equipment 112 may be used to gather spectral information from any portion of the optical path 100 in order to measure spectral tilt in the optical signals associated therewith. For instance, spectral information may be gathered from transmitter 102 (e.g., an output power spectrum), receiver 104 (e.g., a received power spectrum), optical fiber spans 106, and amplifiers 108 and other equipment 110 (e.g., input and output power spectra and gain spectra). If amplifiers 108 or other equipment of the optical path link 100 have spectral adjustment capabilities, computer equipment 112 may use the gathered spectral information to determine how the spectra of amplifiers 108 and the other equipment in link 100 are to be controlled. That is, based on spectral tilt measurements, computer equipment 112 (either local or remote) may issue commands to amplifiers 108, transmitter 102, receiver 104, and other equipment 110 to make appropriate spectral adjustments whereby the spectral adjustments may be used to optimize the gain or signal spectrum flatness (i.e., tilt) along the optical path link 100 at any stage. Additionally, although not central to the present patent application, such spectral adjustments may also be used to optimize the end-to-end or node-to-node signal-to-noise ratio (SNR) across the signal band or spectrum, or may be used to implement any other suitable control or optimization functions for the link 100.

As pointed out in the Background section of the present patent application, spectral tilt in an optical path such as, e.g., the optical path 100 described above, may be caused by a number of factors, which can degrade the overall SNR associated with the optical path if uncorrected. FIG. 2 depicts a graph illustrating various amounts of spectral tilt introduced in an optical signal associated with the optical path 100 shown in FIG. 1. Illustrative transmission spectra are exemplified in the graph where five different tilt spectra T₁, T₂, T₃, T₄, and T₅, are generated by different optical components of the optical path 100. By way of example, T₁ and T₂ spectra have positive tilt and may be used to make the slope of the spectrum of an optical amplifier more positive. The T₃ spectrum is flat, implying that the optical component does not substantially change the tilt of the transmission spectrum of the optical signal. On the other hand, T₄ and T₅ spectra have negative tilt and may be used to make the slope of the spectrum of an optical amplifier more negative.

The illustrative tilt spectra of FIG. 2 are shown between wavelengths □₁ and □₂. This band of wavelengths may correspond to the signal band (such as, e.g., the C- or L-band) in which the optical data signals are transmitted on the medium associated with optical path link 100. For purposes of the present invention, the tilt spectra are assumed to be substantially linear or nearly linear in the signal band, which facilitates the measurement of spectral tilt as will be described below.

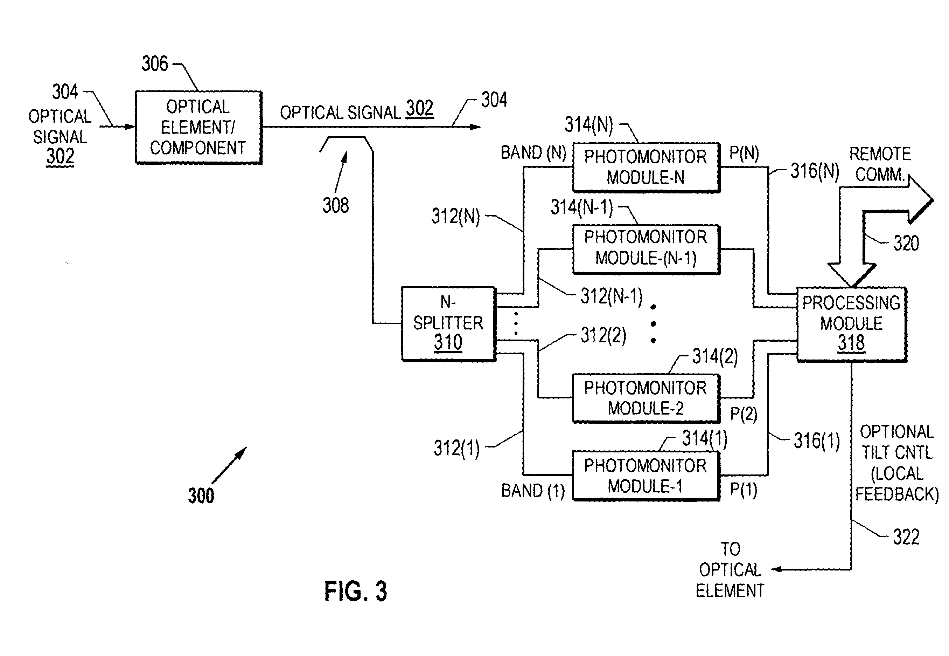

FIG. 3 depicts a functional block diagram of a tilt measurement system 300 according to one embodiment of the present invention wherein spectral tilt introduced in an optical signal's spectrum due to e.g., mis-adjustment of gain stages, bend-induced losses, etc., can be advantageously assessed. An optical signal 302, which can be a wavelength-division-multiplexed signal, is disposed on a fiber medium 304 and is transported via an optical element or component 306 that can form a portion of the optical path link 100 described above. It is envisaged that the spectral tilt behavior introduced by the optical element 306, which can be a span of fiber having certain bends or an active optical component such as an amplifier, for example, is of the first order over the transmission band of the optical path link. That is, the spectral tilt is assumed to have linear slope over the wavelengths of interest.

An optical coupler or tap 308 is operable to tap the optical signal 302 for providing a tapped optical signal to a splitter 310. In the illustrated embodiment of FIG. 3, the splitter 310 is operable to split the optical signal spectrum into a plurality of bands, e.g., N bands, each of which is provided to a respective photomonitor module. Reference numerals 312(1) through 312(N) refer to N optical paths corresponding to the N bands, Band(1) through Band(N), that are provided as output of the splitter 310. Each photomonitor module 314(1) through 314(N) is operable to effectuate optical power spectra measurements of the corresponding Band(i), i = 1, 2,..., N. Any suitable arrangement may be used for implementing the photomonitor modules 314(i), i = 1, 2,..., N, of the spectral tilt measurement system 300. For example, the photomonitor modules may comprise a dispersive element (for instance, a prism, grating, thin-film device, arrayed waveguide device, etc.) and an optical detector array such as a charge-coupled device (CCD) array or a photodiode array. Further, although not particularly shown in FIG. 3, suitable optical filters may also be provided in conjunction with the splitter-photomonitor arrangement of the spectral tilt measurement system 300.

Band-specific optical power spectra measurements P(1) through P(N) effectuated by the photomonitor modules are provided to a processor/controller module 318 via appropriate data paths 316(1)-316(N). Those skilled in the art should appreciate that the processor/controller module 318 may be based on any suitable control electronics and may include one or more microprocessors, microcontrollers, digital signal processors (DSPs), field-programmable gate arrays (FPGAs) or other programmable logic devices (PLDs), application-specific integrated circuits (ASICs), digital-to-analog (D/A) and analog-to-digital (A/D) converters, memory devices, and the like.

Based on the power spectral measurements, the processor/control module 318 is operable to determine relative power ratios associated with the different Bands of the optical signal. Because of the linearity of the spectrally induced tilt, which can be verified by integrating the power over one part of the spectrum and comparing it with the power integrated over another part (or the whole) spectrum, changing relative power ratios are indicative of the tilt introduced in the optical signal. Therefore, the amounts and directionality of such changes in relative power ratios over the optical path medium may be used to compute the spectral tilt introduced by an optical element therein. Accordingly, in one embodiment of the present invention, the power ratio information is provided to a remote monitoring station (not shown in this FIG.) via a remote communications path 320, whereupon the spectral tilt is computed based on determinations relative to the power ratio information available from each optical element/component site of the optical path that is being monitored. The tilt information may be provided to the local processor/controller module 318 which may generate a local tilt control feedback signal 322 that is provided to a tilt controlling apparatus associated with the monitored optical element in order to modulate its tilt spectrum in a particular way. In another embodiment, such local tilt control feedback signals may be provided to the remote monitoring station which may then determine appropriate feedback signals to be applied on a system level. Therefore, it should be realized that the processor/controller functionality required for the tilt measurement system 300 may be either localized or distributed across the optical path link, and may also include a centralized processing entity, e.g., the remote monitoring station alluded to above.

In a still further embodiment, a two-band splitter such as a red/blue splitter may be used for splitting the tapped optical signal into two halves that are of substantially equal bandwidth. The band spectra may then be provided to individual photomonitors for measuring relative power levels in each half of the spectrum. Clearly, such a system provides a simpler and more cost-effective tilt measurement solution than costly optical spectrum analyzers for monitoring spectral tilt at selected sites (e.g., EDFA sites) along an optical link.

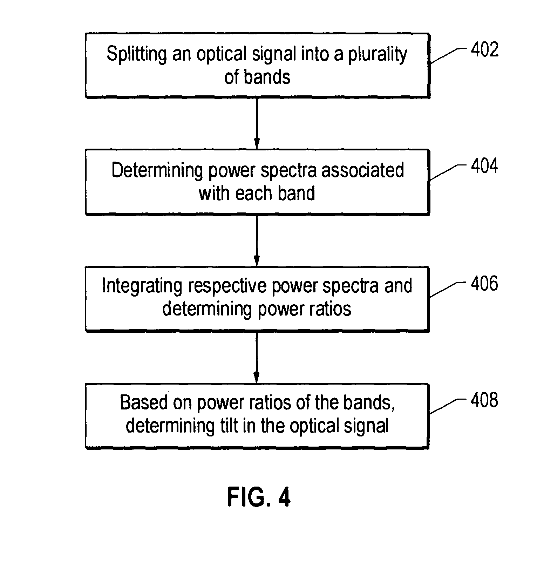

FIG. 4 depicts a flow chart of the operations involved in a tilt measurement method operable with the system shown in FIG. 3. An optical signal associated with an optical path medium (e.g., a single-mode fiber or multimode fiber) is tapped upon transmission via an optical element for splitting into a plurality of bands (block 402). Power spectra associated with the bands are determined thereafter using appropriate photomonitoring equipment (block 404). Linearity of the spectral tilt introduced in the optical signal may be ensured by integrating respective power spectra and comparing the integrated power across the bands. Further, by obtaining power spectra information from different optical component sites, relative power ratios may be determined over the optical path (block 406). As explained hereinabove, a remote monitoring station associated with the optical path may be provided for measuring the relative power ratios. Based on the relative power ratio measurements and determining any changes therein, spectral tilt in the optical signal may be computed for each of the monitored optical component site (block 408).

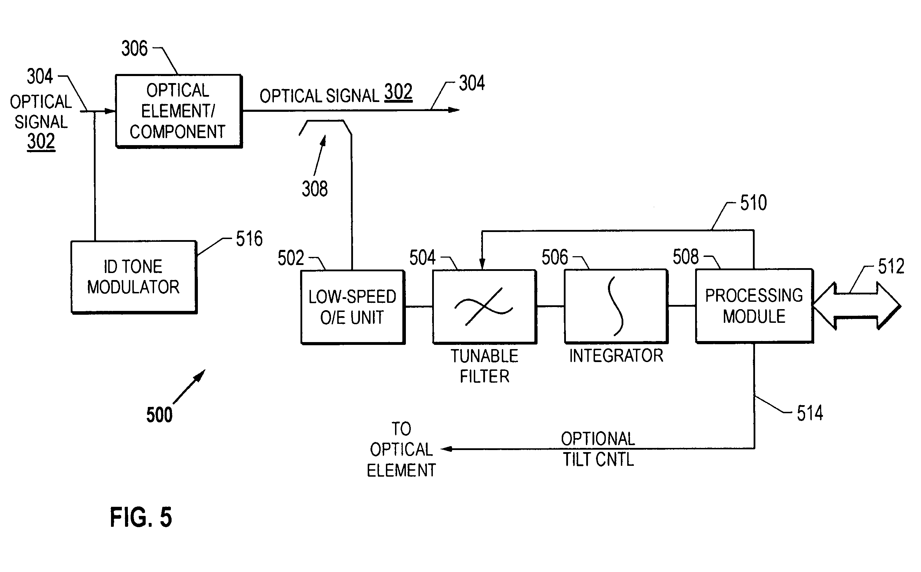

FIG. 5 depicts a functional block diagram of a tilt measurement system 500 according to another embodiment of the present invention. Similar to the system 300 shown in FIG. 3, optical signal 302 is provided as a WDM signal or dense WDM (DWDM) signal disposed on optical fiber medium 304 that may be associated with an optical transmission link such as the optical path 100 shown in FIG. 1. Each channel of the optical signal 302 (e.g., having 40 or more channels) is modulated by a unique low frequency ID tone in the range of 10 KHz - 500 KHz. Clearly, this frequency range is by way of example only; other ID tone frequencies may also be used for purposes of the present patent application. In one implementation, such low frequency tones may comprise dithering frequencies applied in a DWDM transmission system in order to spectrally broaden the signal such that Stimulated Brillouin Scattering (SBS) is reduced. In accordance with the teachings of the present invention, by providing a slightly different modulation frequency for each channel of the optical signal 302, the tones can be used to identify the channels without requiring expensive high-speed optoelectronics. Accordingly, an ID tone modulator 516 is provided for modulating each channel of the optical signal 302 using a unique tone having a particular frequency.

As described hereinabove with reference to the system 300 of FIG. 3, optical signal 302 is transmitted via optical element or component 306 that is capable of introducing spectral tilt. Optical coupler 308 is operable to tap the optical signal 302 that is provided to a low-speed optoelectronics unit, e.g., optical-to-electrical (O/E) converter unit 502, which converts the tapped optical signal 302 into a compound electrical signal including electrical equivalents of the ID tones used for channel modulation. A tunable filter 504 coupled to the O/E converter unit 502 is operable to tunably filter a particular component of the compound electrical signal for selecting individual channel ID modulation tones. An integrator 506 coupled to a suitable processor/controller module 508 is operable to measure the spectral power level associated with each identified channel. It should be apparent to one skilled in the art that in one implementation the integrator 506 may be included with processor module 508 as a single integrated circuit device. Again, such a device may be based on any suitable control electronics and may include one or more microprocessors, microcontrollers, DSPs, FPGAs or other PLDs, ASICs, D/A and A/D converters, memory devices, et cetera. A remote communications path 512 is provided for communicating the channel power measurements to a remote station (not shown) wherein relative channel power levels may be determined. Thereafter, spectral tilt introduced by the optical element or component 306 is computed by comparing the relative channel powers across the optical path of interest.

As with the tilt measurement system 300 set forth in the foregoing description, appropriate tilt control feedback signaling may be provided in the embodiment 500 shown in FIG. 5 also. By way of illustration, an optional local tilt control signal 514 is generated by the processor/controller module 508 based on tilt measurement information provided by the remote station.

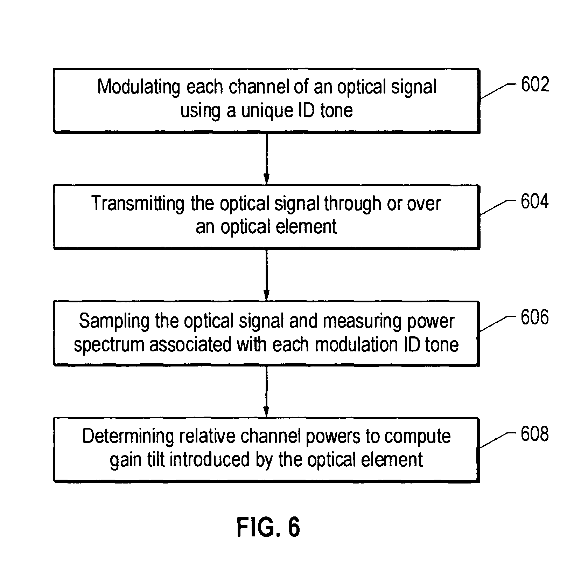

FIG. 6 depicts a flow chart of the operations involved in a tilt measurement method operable with the system shown in FIG. 5. Upon modulating each channel of an optical signal using a unique ID tone (block 602), the optical signal is transmitted through or over an optical element or component for effectuating optical communications over a medium (block 604). The optical signal is sampled for measuring tilt introduced in the optical path by using a suitable optical tap or coupler arrangement, whereupon the spectral power associated with each channel as identified by the corresponding ID tone is measured (block 606). Relative channel powers are thereafter determined, which information is utilized in computing spectral tilt introduced by the optical element in the optical signal (block 608).

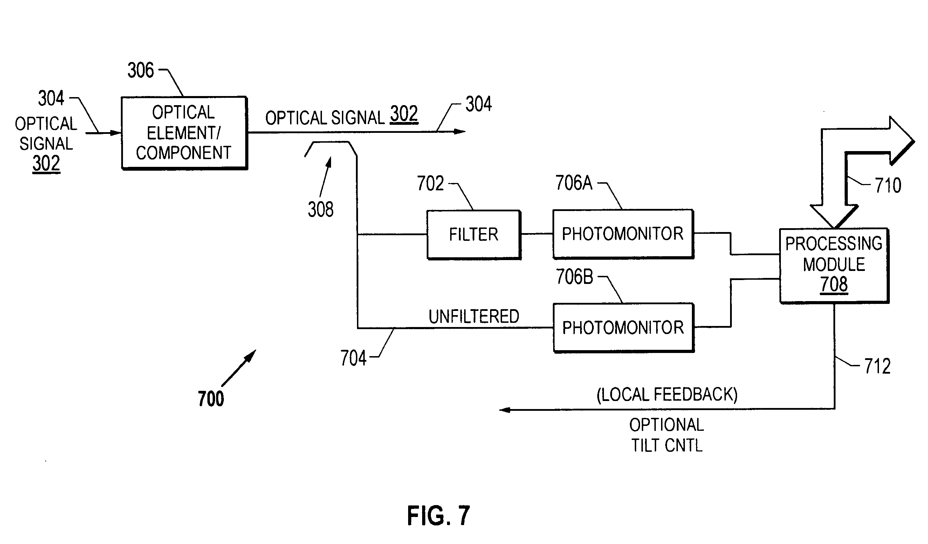

Referring now to FIG. 7, depicted therein is a functional block diagram of a tilt measurement system 700 according to yet another embodiment of the present invention. Similar to the embodiments described previously, optical signal 302 is tapped for measuring tilt introduced by the optical element or component 306. The tapped optical signal 302 is transmitted via a filter 702 whose output is provided to a photomonitor module 706A for measuring the spectral power associated therewith. Power associated with an unfiltered component 704 of the tapped signal is measured by another photomonitor module 706B. The spectral power measurements are provided to local processing module 708 that is in communication with a remote station via a remote communication path 710. Again, by comparing relative power distributions between the filtered component and the unfiltered component of the optical signal across the entire optical path system, the amount of tilt introduced by an optical element, e.g., element 306, may be determined thereby. Depending on application, a local feedback control signal 712 may be implemented for adjusting tilt gain of the optical element as and when necessary.

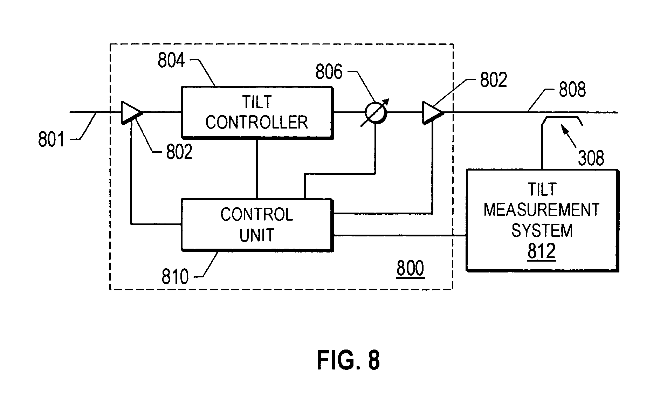

FIG. 8 depicts a functional block diagram of an exemplary optical fiber amplifier (OFA) 800 including a tilt controller 804 that is operable to receive tilt control input signals in accordance with the teachings of the present invention. Optical signals from a span of fiber may be provided to input fiber 801. Corresponding amplified output signals may be provided at output fiber 808. Optical gain may be provided by one or more gain stages such as gain stages 802. Gain stages 802 may include, for example, one or more coils of optically-pumped rare-earth-doped fiber such as erbium-doped fiber. Pumps such as laser diode pumps or other suitable sources of pump light may be used to optically pump the erbium-doped fiber or other rare-earth-doped fiber in stages 802. Gain stages 802 that include multiple optically-pumped coils or gain media may be considered to include multiple gain substages. As alluded to previously, there may be any suitable number of gain stages 802 in amplifier 800.

The gain spectra of a rare-earth-doped fiber filter such as erbium-doped fiber is not intrinsically flat. Accordingly, gain flattening filters may be used in one or more of gain stages 802 to modify the spectral shape of amplifier 800. Spectral adjustments may be made in the output power of OFA 800 by adjusting a tilt controller 804 and/or a variable optical attenuator 806 to control the output powers of the channels of the optical signal. Other gain stage adjustments may also be incorporated in the exemplary optical amplifier 800.

Optical coupler 308 may be provided at the output of the amplifier 800 for sampling optical signals in order to measure any tilt introduced therein. A measurement system 812 such as the tilt measurement system embodiments described above is operable to measure the tilt in accordance with the teachings of the present invention, which tilt information may be provided to a local control unit 810 for appropriately adjusting the gain stages and other components of OFA 800.

Based on the foregoing Detailed Description, it should be appreciated that the present invention advantageously provides an inexpensive yet efficient tilt measurement system operable with optical media for measuring tilt introduced in an optical signal. Because of the simplicity of the design, the tilt measurement system embodiments described herein may be provisioned at the OFA sites in a semi-permanent manner, thereby obviating the need for deploying the more expensive equipment such as optical spectrum analyzers.

The following methods, systems and features, separately or in any combination, may also constitute advantageous embodiments of the invention:
- The described and/or claimed tilt measurement system operable with an optical medium, wherein said optical element comprises an optical fiber amplifier (OFA);
- The described and/or claimed tilt measurement system operable with an optical medium, wherein said optical element comprises an erbium-doped fiber amplifier (EDFA);
- The described and/or claimed tilt measurement system operable with an optical medium, wherein said optical element comprises a rare earth-doped fiber amplifier (REDFA);
- The described and/or claimed tilt measurement system operable with an optical medium, wherein said optical element comprises an optical fiber span;
- The described and/or claimed tilt measurement system operable with an optical medium, wherein said optical fiber span comprises a single-mode fiber (SMF);
- The described and/or claimed tilt measurement system operable with an optical medium, wherein said optical fiber span comprises a multimode fiber;
- The described and/or claimed tilt measurement system operable with an optical medium, wherein said optical signal is operable in L-band (1565 nm to 1635 nm);
- The described and/or claimed tilt measurement system operable with an optical medium, wherein said optical signal is operable in C-band (1530 nm to 1565 nm);
- The described and/or claimed tilt measurement system operable with an optical medium, wherein said optical signal comprises a wavelength-division-multiplexed (WDM) optical signal;
- The described and/or claimed tilt measurement system operable with an optical medium, wherein said plurality of bands comprise two bands, each having substantially equal bandwidth;
- The described and/or claimed tilt measurement system operable with an optical medium, further including means for providing a local feedback control signal indicative of said tilt to a tilt controlling apparatus operable respective to said optical signal;
- The described and/or claimed tilt measurement system operable with an optical medium, wherein said optical element comprises an optical fiber amplifier (OFA);
- The described and/or claimed tilt measurement system operable with an optical medium, wherein said optical element comprises an erbium-doped fiber amplifier (EDFA);
- The described and/or claimed tilt measurement system operable with an optical medium, wherein said optical element comprises a rare earth-doped fiber amplifier (REDFA);
- The described and/or claimed tilt measurement system operable with an optical medium, wherein said optical element comprises an optical fiber span;
- The described and/or claimed tilt measurement system operable with an optical medium, wherein said optical fiber span comprises a fiber selected from the group consisting of a single-mode fiber (SMF) and a multimode fiber;
- The described and/or claimed tilt measurement system operable with an optical medium, wherein said optical signal is operable in L-band (1565 nm to 1635 nm);
- The described and/or claimed tilt measurement system operable with an optical medium, wherein said optical signal is operable in C-band (1530 nm to 1565 nm);
- The described and/or claimed tilt measurement system operable with an optical medium, wherein said optical signal comprises a wavelength-division-multiplexed (WDM) optical signal;
- The described and/or claimed tilt measurement system operable with an optical medium, wherein said splitter comprises a red-blue splitter for splitting said optical signal into two bands, each having substantially equal bandwidth;
- The described and/or claimed tilt measurement method operable with an optical medium, wherein said optical signal comprises a signal transmitted via an optical element;
- The described and/or claimed tilt measurement method operable with an optical medium, wherein said optical element comprises an optical fiber amplifier (OFA);
- The described and/or claimed tilt measurement method operable with an optical medium, wherein said optical element comprises an erbium-doped fiber amplifier (EDFA);
- The described and/or claimed tilt measurement method operable with an optical medium, wherein said optical element comprises a rare earth-doped fiber amplifier (REDFA);
- The described and/or claimed tilt measurement method operable with an optical medium, wherein said optical element comprises an optical fiber span;
- The described and/or claimed tilt measurement method operable with an optical medium, wherein said optical fiber span comprises a single-mode fiber (SMF);
- The described and/or claimed tilt measurement method operable with an optical medium, wherein said optical fiber span comprises a multimode fiber;
- The described and/or claimed tilt measurement method operable with an optical medium, wherein said optical signal is operable in L-band (1565 nm to 1635 nm);
- The described and/or claimed tilt measurement method operable with an optical medium, wherein said optical signal is operable in C-band (1530 nm to 1565 nm);
- The described and/or claimed tilt measurement method operable with an optical medium, wherein said optical signal comprises a wavelength-division-multiplexed (WDM) optical signal;
- A tilt measurement system operable with an optical medium, comprising: means for modulating each channel of an optical signal using a modulation tone, said optical signal being transmitted via an optical element; means for sampling said optical signal and measuring spectral power associated with each channel identified by a corresponding modulation tone; means for determining relative channel powers based on said spectral power measurements; and means for computing spectral tilt introduced in said optical signal responsive to determining said relative channel powers;
- The described and/or claimed tilt measurement system operable with an optical medium, wherein said optical signal comprises a wavelength-division-multiplexed (WDM) optical signal having a plurality of channels;
- The described and/or claimed tilt measurement system operable with an optical medium, wherein said optical element comprises an optical fiber amplifier (OFA);
- The described and/or claimed tilt measurement system operable with an optical medium, wherein said optical element comprises an erbium-doped fiber amplifier (EDFA);
- The described and/or claimed tilt measurement system operable with an optical medium, wherein said optical element comprises a rare earth-doped fiber amplifier (REDFA);
- The described and/or claimed tilt measurement system operable with an optical medium, wherein said optical element comprises an optical fiber span of a single-mode fiber (SMF);
- The described and/or claimed tilt measurement system operable with an optical medium, wherein said optical element comprises an optical fiber span of a multimode fiber;
- The described and/or claimed tilt measurement system operable with an optical medium, wherein said optical signal is operable in L-band (1565 nm to 1635 nm);
- The described and/or claimed tilt measurement system operable with an optical medium, wherein said optical signal is operable in C-band (1530 nm to 1565 nm);
- The described and/or claimed tilt measurement system operable with an optical medium, further including means for providing a local feedback control signal indicative of said tilt to a tilt controlling apparatus operable respective to said optical element;
- The described and/or claimed tilt measurement system operable with an optical medium, wherein said optical signal comprises a wavelength-division-multiplexed (WDM) optical signal having a plurality of channels;
- The described and/or claimed tilt measurement system operable with an optical medium, wherein said optical element comprises an optical fiber amplifier (OFA);
- The described and/or claimed tilt measurement system operable with an optical medium, wherein said optical element comprises an erbium-doped fiber amplifier (EDFA);
- The described and/or claimed tilt measurement system operable with an optical medium, wherein said optical element comprises a rare earth-doped fiber amplifier (REDFA);
- The described and/or claimed tilt measurement system operable with an optical medium, wherein said optical element comprises an optical fiber selected from the group consisting of a single-mode fiber (SMF) and a multimode fiber;
- The described and/or claimed tilt measurement system operable with an optical medium, wherein said optical signal is operable in L-band (1565 nm to 1635 nm);
- The described and/or claimed tilt measurement system operable with an optical medium, wherein said optical signal is operable in C-band (1530 nm to 1565 nm);
- The described and/or claimed tilt measurement method operable with an optical medium, wherein said optical signal comprises a wavelength-division-multiplexed (WDM) optical signal having a plurality of channels;
- The described and/or claimed tilt measurement method operable with an optical medium, wherein said optical element comprises an optical fiber amplifier (OFA);
- The described and/or claimed tilt measurement method operable with an optical medium, wherein said optical element comprises an erbium-doped fiber amplifier (EDFA);
- The described and/or claimed tilt measurement method operable with an optical medium, wherein said optical element comprises a rare earth-doped fiber amplifier (REDFA);
- The described and/or claimed tilt measurement method operable with an optical medium, wherein said optical signal is transmitted via an optical fiber span of a single-mode fiber (SMF);
- The described and/or claimed tilt measurement method operable with an optical medium, wherein said optical signal is transmitted via an optical fiber span of a multimode fiber;
- The described and/or claimed tilt measurement method operable with an optical medium, wherein said optical signal is operable in L-band (1565 nm to 1635 nm);
- The described and/or claimed tilt measurement method operable with an optical medium, wherein said optical signal is operable in C-band (1530 nm to 1565 nm).

Although the invention has been described with reference to certain exemplary embodiments, it is to be understood that the forms of the invention shown and described are to be treated as exemplary embodiments only. Accordingly, various changes, substitutions and modifications can be realized without departing from the spirit and scope of the invention as defined by the appended claims.

## Claims

1. A tilt measurement system operable with an optical medium, comprising:
means for splitting an optical signal associated with said optical medium into a plurality of bands;
means for monitoring power spectra associated with said plurality of bands;
means for determining relative power ratios based on said power spectra; and
means for computing tilt in said optical signal based said relative power ratios.

2. The tilt measurement system operable with an optical medium as recited in claim 1, wherein said optical signal comprises a signal transmitted via an optical element.

3. A tilt measurement system operable with an optical medium, comprising:
an optical coupler for tapping an optical signal associated with said optical medium;
a splitter operable to split said optical signal into a plurality of bands, each band being provided to a respective photomonitor module, wherein each photomonitor module is operable to measure corresponding band's spectral power; and
a processing module for determining relative power ratios based on each band's spectral power and for determining spectral tilt in said optical signal based on said relative power ratios.

4. The tilt measurement system operable with an optical medium as recited in claim 3, wherein said optical signal comprises a signal transmitted via an optical element.

5. A tilt measurement method operable with an optical medium, comprising:
splitting an optical signal associated with said optical medium into a plurality of bands;
monitoring power spectra associated with said plurality of bands;
determining relative power ratios based on said power spectra; and
computing tilt in said optical signal based said relative power ratios.

6. The tilt measurement method operable with an optical medium as recited in claim 5, wherein said optical signal is split into two bands, each having substantially equal bandwidth.

7. The tilt measurement method operable with an optical medium as recited in claim 5, further including the step of providing a local feedback control signal indicative of said tilt to a tilt controlling apparatus operable respective to said optical signal.

8. A tilt measurement system operable with an optical medium, comprising:
a modulator for modulating each channel of an optical signal using a channel modulation tone, said optical signal being transmitted via an optical element;
an optical coupler for tapping said optical signal;
an optoelectronics unit for generating a compound electrical signal associated with said channel modulation tones;
a tunable filter coupled to said optoelectronics unit for tunably filtering a particular component of said compound electrical signal, said particular component corresponding to a channel identified by a specific channel modulation tone;
an integrator coupled to said tunable filter for measuring spectral power associated with each channel identified by a corresponding modulation tone; and
a processing module for determining relative channel powers based on said spectral power measurements and for computing spectral tilt introduced in said optical signal responsive to determining said relative channel powers.

9. A tilt measurement method operable with an optical medium, comprising:
modulating each channel of an optical signal using a modulation tone, said optical signal being transmitted via an optical element;
sampling said optical signal and measuring spectral power associated with each channel identified by a corresponding modulation tone;
determining relative channel powers based on said spectral power measurements; and
computing spectral tilt introduced in said optical signal responsive to determining said relative channel powers.

10. The tilt measurement method operable with an optical medium as recited in claim 9, further including the step of providing a local feedback control signal indicative of said spectral tilt to a tilt controlling apparatus operable respective to said optical element.
